(19) **Europäisches Patentamt / European Patent Office / Office européen des brevets**

(11) **EP 1 192 415 B1**

(12) **EUROPEAN PATENT SPECIFICATION**

(45) Date of publication and mention
of the grant of the patent:
**10.12.2008 Bulletin 2008/50**

(51) Int Cl.:
***G01B 11/30*** (2006.01)

(21) Application number: **01904723.2**

(22) Date of filing: **08.02.2001**

(86) International application number:
**PCT/SE2001/000235**

(87) International publication number:
**WO 2001/059404 (16.08.2001 Gazette 2001/33)**

(54) **ARRANGEMENT AND METHOD FOR MEASURING SURFACE IRREGULARITIES AT AN OBJECT**

VORRICHTUNG UND METHODE ZUM MESSEN VON OBERFLÄCHENUNEBENHEITEN EINES OBJEKTS

ASSEMBLAGE ET PROCEDE DE MESURE DES IRREGULARITES DE SURFACE D'UN OBJET

(84) Designated Contracting States:
**DE FR GB**

(30) Priority: **09.02.2000 SE 0000418**

(43) Date of publication of application:
**03.04.2002 Bulletin 2002/14**

(73) Proprietor: **Volvo Personvagnar AB**
**405 31 Göteborg (SE)**

(72) Inventors:
• **MAX, Erland**
**S-426 68 Västra Frölunda (SE)**

• **LARSSON, Peter**
**S-426 56 Västra Frölunda (SE)**

(74) Representative: **Hammond, Andrew David et al**
**Valea AB**
**Lindholmspiren 5**
**417 56 Göteborg (SE)**

(56) References cited:
**EP-A1- 0 955 538    WO-A1-00/45125**
**WO-A1-98/36240    DE-A1- 19 749 435**
**US-A- 4 677 473    US-A- 4 792 696**

• **PATENT ABSTRACTS OF JAPAN & JP 04 279 848 A (KAWASAKI STEEL CORP) 05 October 1992**

**EP 1 192 415 B1**

**Description**

TECHNICAL FIELD

The present invention relates to an arrangement for measuring surface irregularities at an object in accordance with the preamble of claim 1, and to a method for measuring surface irregularities at an object in accordance with the preamble of claim 8. Particularly, the invention relates to an arrangement for measuring surface irregularities at an object which utilises strobe lighting and photometric stereo, and to a method for measuring surface irregularities at an object which utilises strobe lighting and photometric stereo.

STATE OF THE ART

A method for topography measurement on flat objects by means of directional illumination is previously known from "Optronik nyheter - Topografimätning med strykande belysning", June 1999. Document US 4792696 discloses measuring the surface structure using shadow formation. Document DE 19749435 discloses the projection of a pattern onto the object for three-dimensional measurements.

TECHNICAL PROBLEM

In those cases when the object which is to be measured is not flat but exhibits a three-dimensional geometry, there is no possibility to apply topography measurement by means of directional illumination directly.

SUMMARY OF THE INVENTION

The object of the invention is to provide an arrangement and a method for measuring surface irregularities at an object, where the object is illuminated by a source of light from a first position at a small angle of incidence, whereby measurement on an object exhibiting a curved, three-dimensional geometry is made possible.
This object is achieved by means of an arrangement according to the characterising portion of claim 1, and a method according to the characterising portion of claim 8. By generating a pattern matrix by means of a pattern projector, information about the shape and location of the object in relation to the pattern projector and camera is created. A useful pattern for this application is a gridiron pattern which is projected on the object. The projection of the pattern on the object describes the surface and position of the object, wherein the size of the squares can be utilised for determining the distance from the projector, and the deviation from linearity determines the shape of the object. When the shape and position of the object are known, the evaluating means determines the surface microstructure of the object.

DESCRIPTION OF THE DRAWINGS

In the following, the invention will be described in detail with reference to attached figures in the drawings, where

Fig. 1    shows an explanatory sketch of the function of a strobe lighting profilometer,

Fig. 2    shows an embodiment of the invention, and

DESCRIPTION OF EMBODIMENTS

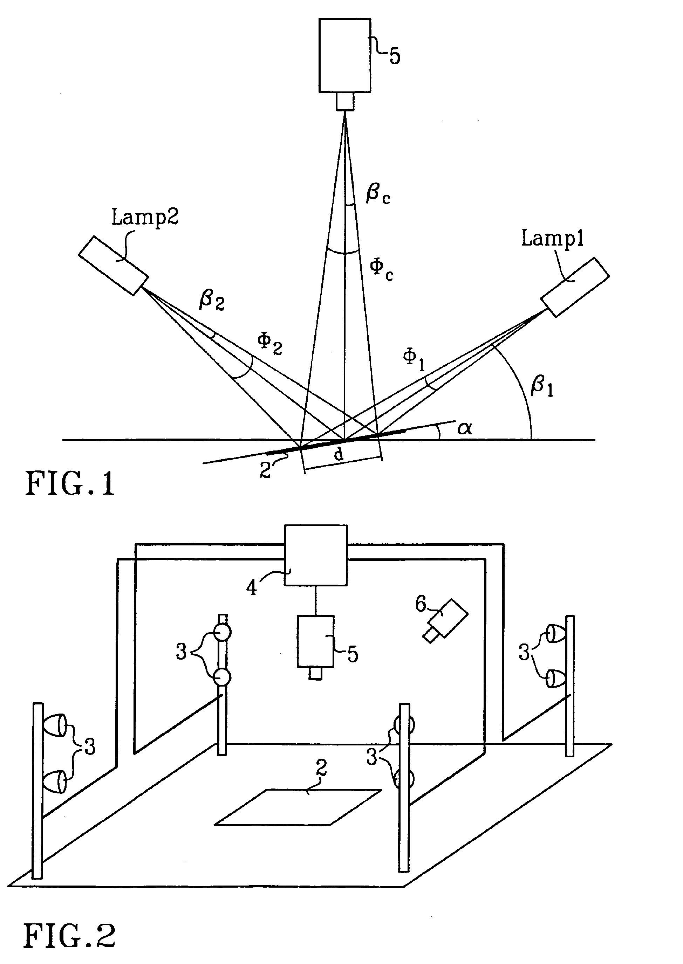

Fig. 1 shows a simple method which has been tested within this work. Surface irregularities are shadowed differently, when the surface is illuminated at two different angles by means of two concentrated sources of light. By means of collecting images at these two lighting angles, information about the surface profile can be obtained. The question at issue was if this simple method provides measurement vales which are sufficiently reliable.
The geometry of an arbitrary image point $(x, y)$ is shown in Fig. 1. The pixel of the camera records the angle $\phi_c$ and "sees" the distance d in the x-direction of the test surface. It can be demonstrated that the lighting effect $P_i(x,y)$ incident on the camera from the image point $(x, y)$ of the surface, with lighting from lamp no. $i$ ($i$ = 1, 2), is

$$P_i\ (x,y)= \phi_c^{\ 2} \cdot l_c^{\ 2} \cdot \Omega_c \cdot \frac{I_i\ (x,\ y)}{l_i^{\ 2}(x,\ y)} \cdot \frac{R_i\ (x,\ y)}{\Omega_i\ (x,\ y)} \cdot \frac{sin(\beta_i\ (x,\ y)\ -\ \alpha(x,\ y))}{sin(\beta_c\ (x,\ y)\ -\ \alpha(x,\ y))} \qquad [W] \qquad (1)$$

where

| | |
|---|---|
| $\phi_c$ [rad] | is the angle which a camera-pixel records, |
| $l_c$ [m] | is the distance between the camera and the test surface, |
| $\Omega_c$ [srad] | is the solid recording-angle of the camera, |
| $I_i$ [W/srad] | is the light intensity from lamp no. *i* to the image point *(x,y)* |
| $l_i$ [m] | is the distance between lamp no. *i* and the image point *(x,y)* |
| $R_i$ [-] | is the reflectance of the surface in the point *(x,y)* |
| $\Omega_i$ [srad] | is the solid scattering-angle of the surface in the point *(x,y)* towards the camera with lighting from lamp no. *i*, |
| $\beta_i$ [rad] | is the angle from the image point *(x,y)* to lamp no. *i*, |
| $\beta_c$ [rad] | is the angle from the image point *(x,y)* to the camera, |
| $\alpha$ [rad] | is the deformation angle of the surface in the image point *(x,y)*. |

In order to obtain the angle $\alpha(x,y)$ for all image points $(x,y)$ on the surface, it is convenient to create a normalized difference $A$ of the two images $P_1(x,y)$ and $P_2(x,y)$ in accordance with

$$A(x,\ y) = \frac{k_2(x,\ y) \cdot P_2(x,\ y) - k_1(x,\ y) \cdot P_1(x,\ y)}{k_2(x,\ y) \cdot P_2(x,\ y) + k_1(x,\ y) \cdot P_1(x,\ y)} \qquad (2)$$

where

$$k_i(x,\ y) = \frac{l^2_i(x,\ y)}{I_i(x,\ y)} \cdot \frac{\Omega_i(x,\ y)}{R_i(x,\ y)} \quad , \qquad i = 1,\ 2 \qquad (3)$$

$P_i\ (x,y)$    are measured,

$l_i\ (x,y)$    are known geometrical quantities,

$I_i\ (x,y)$    are known from calibration,

$\dfrac{\Omega_i(x,y)}{R_i(x,y)}$    in principle is different for different angles and directions.

As a result of the symmetry of the arrangement (Fig. 1), the ratio for $i = 1$ can be expected to become rather similar to the ratio for $i = 2$, but this must be investigated further. A completely diffuse surface gives the ratio = $\pi$/reflectance.

If

$$\frac{\Omega_1\,(x,\,y)}{R_1\,(x,\,y)} \;=\; \frac{\Omega_2\,(x,\,y)}{R_2\,(x,\,y)}$$

it results in

$$A(x, y) \;=\; \frac{sin(\beta_2\,(x,\,y) - \alpha\,(x,\,y)) - sin(\beta_1\,(x,\,y) - \alpha\,(x,\,y))}{sin(\beta_2\,(x,\,y) - \alpha\,(x,\,y)) + sin(\beta_1\,(x,\,y) - \alpha\,(x,\,y))} \qquad (4)$$

Since the angles $\beta_1$ and $\beta_2$ are known geometrical quantities, the deformation angle $\alpha(x,y)$ of the surface can be calculated from the measured images $P_1\,(x,y)$ and $P_2\,(x,y)$ by means of equations 2 - 4.

If $\beta_1\,(x,y) \approx \pi - \beta_2\,(x,y) \approx \beta$, and $\alpha\,(x,\,y) << 1$, $\alpha\,(x,\,y)$ can be approximated as

$$\alpha(x,y) \approx tan\,(\beta) \cdot A(x,y) \qquad (5)$$

If further $k_1(x,y) \approx k_2\,(x,y)$, it results in

$$\alpha(x,y) \approx tan\,(\beta) \cdot \frac{P_2(x,\,y) - P_1(x,\,y)}{P_2(x,\,y) + P_1(x,\,y)} \qquad (6)$$

Figure 2 shows an arrangement 1 for measuring surface irregularities at an object 2. The arrangement 1 comprises a source of light 3 arranged to illuminate the object from at least two different positions at a small angle of incidence towards the object. In the shown embodiment, 8 flash bulbs are mounted in such a way that the flash bulbs form the corners in a rectilinear block. By means of this design, simplified calculation routines are obtained for an evaluating means 4, which is arranged to calculate the surface microstructure on the object 2 from input data provided by a camera 5. The camera 5 is arranged to measure the surface microstructure from the shadow formation generated by the flash bulbs 3. The evaluating means 4 determines the surface microstructure from the generated shadow formation by means of signal processing of an input signal from said camera 5, in accordance with the principle which has been explained with reference to Fig. 1. Furthermore, the arrangement comprises a pattern projector 6, which is intended to generate a pattern matrix on the object 2. The pattern matrix preferably can be constituted by a gridiron pattern which is projected on the object. The projection of the pattern on the object describes the surface and the position of the object, wherein the size of the squares can be utilised for determining the distance from the projector, and the deviation from linearity determines the shape of the object.

The evaluating means 4 is arranged to measure the shape of the object 2 from the projection of the pattern matrix on the object 2, wherein the evaluating means 4 is arranged to utilise information about the shape of the object 2, calculated from the projection of the pattern matrix, when determining the surface microstructure of the object.

When the shape and position of the object 2 are known, the evaluating means 4 determines the surface microstructure of the object.

By means of performing at least two lightings of the object 2, the system can compensate for variations in the reflectance of the object. An angle-dependent scattering pattern can be compensated for if additional lightings are performed. In order to compensate for the angle-dependent scattering, it is advantageous to mount the lamps at different heights above the object. Initially, however, a parameter model for the scattering variation has to be generated. Thereafter, the value of the parameters can be calculated.

In order to achieve a good measurement result, the angle of the incident ray should not be made too large. For this reason, when objects having a non-flat geometry are to be measured, it is necessary with an array of sources of light.

When performing measurements by means of the arrangement, a calibration step is performed whenever applicable. This step includes that data concerning relative positions between camera and lamps is controlled and loaded into the evaluating means, that the lamps are calibrated with regard to light intensity and direction, that the camera is calibrated in each pixel, and that the pattern projector is calibrated against a flat surface.

The above-mentioned calibration step is not necessary to perform for each measurement. However, it is of great importance for the result that the arrangement is correctly calibrated.

When the measurement is to be performed, according to one embodiment, the following steps are performed:

1) A background image is recorded.

2) One image from each lamp is recorded and the background image is subtracted from this.

3) The shape of the object is measured by means of the pattern projector.

4) The angles of inclination $\alpha$ in x- and $\gamma$-direction of the surface are calculated for each image point from normalized differences in accordance with what has been described in connection with the above-explained principle.

5) The angle-dependence of the light scattering is calculated for the obtained preliminary $\alpha$-values.

6) The $\alpha$-values are adjusted so that the angle-dependence of the light-scattering is optimised.

7) The height profile is integrated from the $\alpha$-values and added to the shape of the object.

8) The result is presented.

## Claims

1.   An arrangement (1) for measuring surface irregularities at an object (2), which arrangement comprises at least one source of light (3) arranged to illuminate the object from at least two different positions at a small angle of incidence towards the object, a camera (5) arranged to measure the shadow formation generated by said illumination of the surface microstructure, and an evaluating means (4) for determining the surface microstructure from the generated shadow formation by means of signal processing of an input signal from said camera (5),
**characterised in that** the arrangement further comprises a pattern projector (6) adapted to generate a pattern matrix on the object (2), and that the evaluating means (4) is arranged to measure the shape of the object (2) from the projection of the pattern matrix on the object (2), wherein the evaluating means (4) is arranged to utilise information about the shape of the object (2) calculated from the projection of the pattern matrix when determining the surface microstructure of the object (2).

2.   An arrangement according to claim 1,
**characterised in that** said at least one source of light (3) is arranged to illuminate the object (2) from a plurality of different positions at different angular positions in relation to the object (2), that said camera (5) is arranged to measure the shadow formation at said different angular positions, and that said evaluating means (4) is arranged to generate information about the reflectance of the object (2) from said measured shadow formation.

3.   An arrangement according to claim 1,
**characterised in that** said at least one source of light (3) is arranged to illuminate the object (2) from a plurality of different positions at different angular positions in relation to the object (2), that said camera (5) is arranged to measure the shadow formation at said different angular positions, and that said evaluating means (4) is arranged to generate information about angle-dependence of the light-scattering of the object (2) from said shadow formation.

4.   An arrangement according to claim 2 or 3,
**characterised in that** said source of light (3) is arranged to illuminate the object (2) from at least three different positions at different angular positions in pairs in relation to the object (2), wherein compensation for angle-dependence and reflectance is enabled when determining the surface microstructure of the object (2).

5.   An arrangement according to any one of claims 1 - 4,
**characterised in that** said at least one source of light (2) is arranged to illuminate the object (2) from a plurality of different positions at different angular positions, wherein illumination at a small angle of incidence towards the object (2) is accomplished also for an object having a non-flat geometry.

6.   An arrangement according to any one of the preceding claims,
**characterised in that** said at least one source of light (3) is constituted of concentrated arrays of flash bulbs in pairs placed at different angles in relation to the object (2).

7. An arrangement according to any one of the preceding claims,
**characterised in that** said source of light (3) is constituted of an orthogonal array of concentrated flash bulbs in pairs in x-direction, y-direction and z-direction.

8. A method for measuring surface irregularities at an object (2),
where the object (2) is illuminated by a source of light (3) from a first position at a small angle of incidence, wherein the surface microstructure of the object (2) generates a first shadow formation and a camera (5) measures the first shadow formation generated by the light source (3) from the first position and stores information about the first shadow formation in a memory, where the object (2) is illuminated by a source of light from a second position at a small angle of incidence, wherein the surface microstructure of the object (2) generates a second shadow formation and the camera (5) measures the second shadow formation generated by the source of light (3) from a second position and stores information about the second shadow formation in a memory,
**characterised in that** a pattern matrix is projected on the object (2) by means of a pattern projector (6), that the shape of the object (2) is measured by the evaluating means (4) from the projection of the pattern matrix on the object (2) and that the evaluating means (4) determines the surface microstructure from information about the projection of the pattern matrix on the object (2) and said shadow formations.

**Patentansprüche**

1. Eine Anordnung (1) zum Messen von Oberflächenunregelmäßigkeiten an einem Gegenstand (2),
wobei die Anordnung umfasst: mindestens eine Lichtquelle (3), die so eingerichtet ist, dass sie den Gegenstand von mindestens zwei verschiedenen Positionen aus mit einem kleinen Einfallswinkel zu dem Gegenstand hin beleuchtet, eine Kamera (5), die so eingerichtet ist, dass sie die durch die Beleuchtung erzeugte Schattenbildung der Oberflächenmikrostruktur misst, und ein Auswertungsmittel (4) zum Bestimmen der Oberflächenmikrostruktur ausgehend von der erzeugten Schattenbildung mittels der Signalverarbeitung eines Eingangssignals von der Kamera (5),
**dadurch gekennzeichnet, dass** die Anordnung ferner einen Musterprojektor (6) umfasst, der so angepasst ist, dass er auf dem Gegenstand (2) eine Mustermatrix erzeugt, und dass das Auswertungsmittel (4) so eingerichtet ist, dass es ausgehend von der Projektion der Mustermatrix auf dem Gegenstand (2) die Form des Gegenstands (2) misst, wobei das Auswertungsmittel (4) so eingerichtet ist, dass es bei der Bestimmung der Oberflächenmikrostruktur des Gegenstands (2) Informationen über die Form des Gegenstands (2) nutzt, die ausgehend von der Projektion der Mustermatrix berechnet werden.

2. Eine Anordnung nach Anspruch 1,
**dadurch gekennzeichnet, dass** mindestens eine Lichtquelle (3) so eingerichtet ist, dass sie den Gegenstand (2) von einer Mehrzahl verschiedener Positionen aus mit verschiedenen Winkelpositionen bezogen auf den Gegenstand (2) beleuchtet, dass die Kamera (5) so eingerichtet ist, dass sie die Schattenbildung bei den verschiedenen Winkelpositionen misst, und dass das Auswertungsmittel (4) so eingerichtet ist, dass es ausgehend von der gemessenen Schattenbildung Informationen über das Reflexionsvermögen des Gegenstands (2) erzeugt.

3. Eine Anordnung nach Anspruch 1,
**dadurch gekennzeichnet, dass** mindestens eine Lichtquelle (3) so eingerichtet ist, dass sie den Gegenstand (2) von einer Mehrzahl verschiedener Positionen aus mit verschiedenen Winkelpositionen bezogen auf den Gegenstand (2) beleuchtet, dass die Kamera (5) so eingerichtet ist, dass sie die Schattenbildung bei den verschiedenen Winkelpositionen misst, und dass das Auswertungsmittel (4) so eingerichtet ist, dass es ausgehend von der Schattenbildung Informationen über die Winkelabhängigkeit der Lichtstreuung des Gegenstands (2) erzeugt.

4. Eine Anordnung nach Anspruch 2 oder 3,
**dadurch gekennzeichnet, dass** die Lichtquelle (3) so eingerichtet ist, dass sie den Gegenstand (2) von mindestens drei verschiedenen Positionen aus mit verschiedenen Winkelpositionen paarweise bezogen auf den Gegenstand (2) beleuchtet, wobei bei der Bestimmung der Oberflächenmikrostruktur des Gegenstands (2) eine Kompensation für Winkelabhängigkeit und Reflexionsvermögen aktiviert ist.

5. Eine Anordnung nach einem der Ansprüche 1-4,
**dadurch gekennzeichnet, dass** die mindestens eine Lichtquelle (3) so eingerichtet ist, dass sie den Gegenstand (2) von einer Mehrzahl verschiedener Positionen aus mit verschiedenen Winkelpositionen beleuchtet, wobei die Beleuchtung mit einem kleinen Einfallswinkel zu dem Gegenstand (2) hin auch für einen Gegenstand erreicht wird, der keine flache Geometrie aufweist.

**6.** Eine Anordnung nach einem der vorangehenden Ansprüche, **dadurch gekennzeichnet, dass** die mindestens eine Lichtquelle (3) von konzentrierten Anordnungen von Blitzlichtlampen in Paaren, die mit verschiedenen Winkeln bezogen auf den Gegenstand (2) angeordnet sind, gebildet wird.

**7.** Eine Anordnung nach einem der vorangehenden Ansprüche, **dadurch gekennzeichnet, dass** die Lichtquelle (3) von einer orthogonalen Anordnung konzentrierter Blitzlichtlampen in Paaren in X-Richtung, Y-Richtung und Z-Richtung gebildet wird.

**8.** Ein Verfahren zum Messen von Oberflächenunregelmäßigkeiten an einem Gegenstand (2), bei dem der Gegenstand (2) von einer Lichtquelle (3) von einer ersten Position aus mit einem kleinen Einfallswinkel beleuchtet wird, wobei die Oberflächenmikrostruktur des Gegenstands (2) eine erste Schattenbildung erzeugt und eine Kamera (5) die von der Lichtquelle (3) von der ersten Position aus erzeugte erste Schattenbildung misst und Informationen über die erste Schattenbildung in einem Speicher speichert, bei dem der Gegenstand (2) von einer Lichtquelle von einer zweiten Position aus mit einem kleinen Einfallswinkel beleuchtet wird, wobei die Oberflächenmikrostruktur des Gegenstands (2) eine zweite Schattenbildung erzeugt und die Kamera (5) die von der Lichtquelle (3) von einer zweiten Position aus erzeugte zweite Schattenbildung misst und Informationen über die zweite Schattenbildung in einem Speicher speichert, **dadurch gekennzeichnet, dass** mittels eines Musterprojektors (6) eine Mustermatrix auf den Gegenstand (2) projiziert wird, dass die Form des Gegenstands (2) von dem Auswertungsmittel (4) ausgehend von der Projektion der Mustermatrix auf den Gegenstand (2) gemessen wird und dass das Auswertungsmittel (4) ausgehend von Informationen über die Projektion der Mustermatrix auf den Gegenstand (2) und den Schattenbildungen die Oberflächenmikrostruktur bestimmt.

**Revendications**

**1.** Ensemble (1) pour mesurer des irrégularités de surface sur un objet (2), l'ensemble comprenant au moins une source de lumière (3) adaptée pour illuminer l'objet depuis au moins deux positions différentes avec un faible angle d'incidence en direction de l'objet, une caméra (5) adaptée pour mesurer la formation de l'ombre créée par ladite illumination de la microstructure de surface, et un moyen d'évaluation (4) pour déterminer la microstructure de surface à partir de la formation d'ombre créée par traitement de signal d'un signal d'entrée provenant de ladite caméra (5), *caractérisé en ce que* l'ensemble comprend en plus un projecteur (6) de motifs apte à générer une matrice de motifs sur l'objet (2) et *en ce que* le moyen d'évaluation (4) est adapté pour mesurer la forme de l'objet (2) à partir de la projection de la matrice de motifs sur l'objet (2), le moyen d'évaluation (4) étant adapté pour utiliser les informations sur la forme de l'objet (2) calculées à partir de la projection de la matrice de motifs lorsqu'on détermine la microstructure de surface de l'objet (2).

**2.** Ensemble selon la revendication 1, *caractérisé en ce qu'*au moins une source de lumière (3) est adaptée pour illuminer l'objet (2) depuis une pluralité de positions différentes avec des positions angulaires différentes par rapport à l'objet (2), *en ce que* ladite caméra (5) est adaptée pour mesurer la formation de l'ombre dans lesdites positions angulaires différentes, et *en ce que* ledit moyen d'évaluation (4) est adapté pour générer des informations sur la réflectance de l'objet (2) à partir de ladite formation de l'ombre mesurée.

**3.** Ensemble selon la revendication 1, *caractérisé en ce que* ladite au moins une source de lumière (3) est adaptée pour illuminer l'objet (2) à partir d'une pluralité de positions différentes avec des positions angulaires différentes par rapport à l'objet (2), *en ce que* ladite caméra (5) est adaptée pour mesurer la formation de l'ombre dans lesdites positions angulaires différentes, et *en ce que* ledit moyen d'évaluation (4) est adapté pour générer des informations sur la dépendance angulaire de la diffusion de la lumière de l'objet (2) à partir de ladite formation de l'ombre.

**4.** Ensemble selon la revendication 2 ou 3, *caractérisé en ce que* ladite source de lumière (3) est adaptée pour illuminer l'objet (2) depuis au moins trois positions différentes avec des positions angulaires différentes, par paires par rapport à l'objet (2), dans lequel une compensation pour la dépendance angulaire et la réflectance est activée lorsqu'on détermine la microstructure de surface de l'objet (2).

**5.** Ensemble selon l'une quelconque des revendications 1 à 4, *caractérisé en ce que* ladite au moins une source de lumière (2) est adaptée pour illuminer l'objet (2) depuis une pluralité de positions différentes avec des positions angulaires différentes, l'illumination selon un faible angle d'incidence dirigée vers l'objet (2) étant également accomplie pour un objet ayant une géométrie non plate.

**6.** Ensemble selon l'une quelconque des revendications précédentes, *caractérisé en ce que* ladite au moins une source de lumière (3) est constituée de réseaux groupés de lampes flashs par paires placés selon des angles différents par rapport à l'objet (2).

**7.** Ensemble selon l'une quelconque des revendications précédentes, *caractérisé en ce que* ladite source de lumière (3) est constituée d'un réseau orthogonal de lampes flashs groupées par paires dans la direction x, dans la direction y et dans la direction z.

**8.** Procédé de mesure des irrégularités de surface sur un objet (2), où l'objet (2) est illuminé par une source de lumière (3) depuis une première position avec un faible angle d'incidence, dans lequel la microstructure de surface de l'objet (2) génère une première formation d'ombre et une caméra (5) mesure la première formation d'ombre générée par la source de lumière (3) depuis la première position et stocke dans une mémoire les informations concernant la première formation d'ombre, où l'objet (2) est illuminé par une source de lumière depuis une deuxième position avec un faible angle d'incidence, dans lequel la microstructure de surface de l'objet (2) génère une deuxième formation d'ombre et la caméra (5) mesure la deuxième formation d'ombre générée par la source de lumière (3) depuis la deuxième position et stocke dans une mémoire les informations concernant la deuxième formation d'ombre, *caractérisé en ce qu'*une matrice de motifs est projetée sur l'objet (2) au moyen d'un projecteur (C) de motifs, *en ce que* la forme de l'objet (2) est mesurée par un moyen d'évaluation (4) à partir de de la projection de la matrice de motifs sur l'objet (2), et *en ce que* le moyen d'évaluation (4) détermine la microstructure de surface à partir des informations concernant la projection de la matrice de motifs sur l'objet (2) et les formations d'ombre.

FIG.1

FIG.2

**EP 1 192 415 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4792696 A
- DE 19749435